# EUROPEAN PATENT SPECIFICATION

(11) **EP 0 834 763 B1**
(45) Date of publication and mention of the grant of the patent: **01.08.2001**
(21) Application number: 95918773.3
(22) Date of filing: 23.05.1995
(51) Int. Cl.: G02F 1/133, G09G 3/36

(54) **COMMON ELECTRODE DRIVING DEVICE IN A LIQUID CRYSTAL DISPLAY**
STEUERVORRICHTUNG FÜR GEMEINSAME ELEKTRODE IN EINER FLÜSSIGKRISTALLANZEIGE
DISPOSITIF DE COMMANDE D'ELECTRODE COMMUNE DANS UN AFFICHAGE A CRISTAUX LIQUIDES

(43) Date of publication of application: 08.04.1998
(73) Proprietor: INTERNATIONAL BUSINESS MACHINES CORPORATION, Armonk, NY 10504 (US)
(72) Inventor: KOBAYASHI, Yoshinao, IBM Japan Ltd, Yamato-shi, Kanagawa-ken 242 (JP); KURODA, Akihiro, IBM Japan Ltd, Yamato-shi, Kanagawa-ken 242 (JP); SEKIYA, Kazuo, IBM Japan Ltd, Yamato-shi, Kanagawa-ken 242 (JP)
(74) Representative: Boyce, Conor
(86) International application number: PCT/JP95/00991
(87) International publication number: WO 96/37803

(56) References cited:
- JP-A- 3 259 218
- JP-A- 55 083 090
- PATENT ABSTRACTS OF JAPAN vol. 018, no. 036 (P-1678), 19 January 1994 -& JP 05 265406 A (FUJITSU LTD), 15 October 1993
- PATENT ABSTRACTS OF JAPAN vol. 016, no. 060 (P-1312), 14 February 1992 -& JP 03 259218 A (DAICHI:KK;OTHERS: 02), 19 November 1991

## Description

The present invention relates to a liquid crystal display (LCD) panel, and, more particularly, to a device performing common inversion in the LCD panel.

Typically, when an LCD panel (TFT LCD panel which is an LCD panel in active matrix method) is driven, it is necessary to apply voltages with different polarities to liquid crystals used in the LCD in every predetermined durations because they may be damaged if voltage with the same polarity is continuously applied to them. In such case, there may arise no problem if a driver circuit driving the LCD panel can output signals in a range from +5V to -5V. However, in a case where the TFT LCD panel is driven by using a source driver which can output only in a range of 5V, the above-mentioned alternating current driving has been apparently performed by swinging the driving voltage for common electrode in a range between 0V and about 5V (sometimes, -1V and +6V). The common electrode is a capacitive load which requires relatively high power of as much as 0.5W for charge and discharge for VGA (640 x 480 pixels).

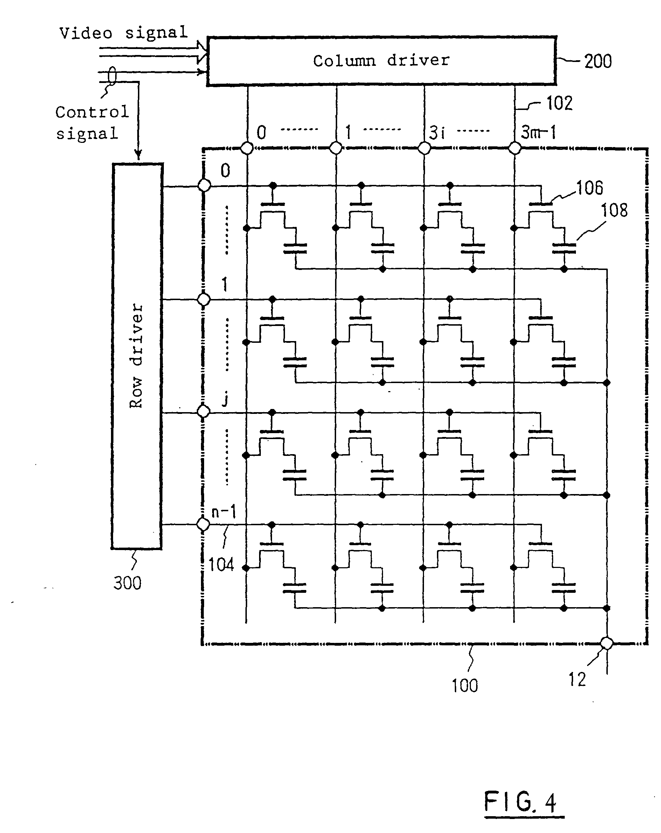

Figures 4 and 5 show an example of the background art. Figure 4 shows a TFT LCD panel 100. The LCD panel 100 comprises a column driver 200 for distributing a video signal to each source line 102, a row driver 300 driving each gate line 104, transistors 106 the source of which is connected to the source line 102, the gate of which is connected to the gate line 104, and which exist in the number of pixels, liquid crystals (here, capacitances 108 being depicted as an equivalent circuit), and a common electrode 12 mounted on a surface opposite to the transistors 106. Because this TFT LCD panel 100 is of a conventional type, further description is not given. When the column driver 200 outputs a signal on the source line 102, a transistor 106 which is connected to a gate line turned on by the row driver 300 drives the liquid crystal 108 with the voltage output on the source line 102 so as to display a desired image.

Here, if the column driver 200 driving the source line can output a signal only in a range of 5V as mentioned earlier, the voltage for the common electrode 12 must be swung between 0V and about 5V. Since the circuit at and after the liquid crystal 108 as viewed from the common electrode 12 is a capacitive load as described earlier, it appears to be a capacitance C_{P} (about 0.2 µF) as shown in Figure 5. This capacitance has been driven by a driver 400.

Such drive method for the common electrode 12 needs much power. When such LCD panel is used for a notebook computer, power saving is one of major problems. Reducing power consumed by the LCD panel leads to extension of available time of the entire computer.

Another example of the background art is described in the following. JP-A-5-265406 discloses a device in which a common electrode is divided into multiple electrodes, one common electrode is short circuited to another one in common inversion to transfer charges stored in one common electrode to the other, and, then, a driver circuit drives it to desired potential.

However, this approach requires a special common electrode. In addition, short-circuiting only makes potential in two common electrodes equivalent, and driving by the drive circuit is required for making the common electrode the desired voltage so that reduction of power consumption would be in a small degree.

### [Summary of the Invention]

An object of the present invention is to provide a device which changes the voltage for the common electrode of an LCD panel to a desired voltage with less drive current in switching the voltage for the common electrode.

More particularly, the object of the present invention is to provide a device which consumes less power by recovering and reusing energy stored in the common electrode.

Another object of the invention is to provide a circuit which attains saving of power consumption with less noise.

The device to attain the objects just described is a driver for a common electrode as recited in claim 1. With such arrangement, the charge hold capacitance once holds charges stored in the common electrode so that driving by the first driver is reduced. The second driver complements loss in the circuit to put additional charges into the charge hold capacitance so that the voltage of the common electrode can be more quickly changed to a desired voltage.

Another aspect of the present invention is a driver for a common electrode as recited in claim 2. In this case, because the second driver does not supply additional charges, the driving by the driver is not reduced as much as in the previous aspect of the present invention due to loss in the circuit. However, power is sufficiently saved in comparison with the background art.

In the above two aspects, it is possible to connect one end of the inductance to the common electrode and the other end to the switch means, and to connect one end of the inductance to the charge hold capacitance and the other end to the switch means.

In addition, in the first aspect of the present invention, the second driver may be arranged to operate during the first driver is operating.

In the first and second aspects of the present invention, the duration in which the resonance circuit operates is set to half of the cycle of the resonance circuit. This causes all charges stored in one capacitance to move to the other so that the maximum performance can be attained.

Still another aspect of the present invention is a driver for a common electrode comprising: a driver for driving the common electrode to hold two predetermined voltages symmetrical to the ground voltage every horizontal scan period, an inductance for constructing a resonance circuit, and switch means for switching to operate the resonance circuit for a predetermined period when the voltage of the common electrode is changed, wherein the inductance or the switch means are connected to the ground. This causes the resonance circuit to move energy so that the common inversion can be performed with less energy than full driving by the driver.

In this case, the maximum performance can be attained by setting the timing to turn off the switch means at the time when the current flowing through the inductance becomes substantially zero.

The above-mentioned driver for the common electrode is of course implemented in a liquid crystal display panel.

According to the first aspect of the present invention, when the voltage of the common electrode is changed, the switch means turns on the switch to operate the resonance circuit for a predetermined period, and moves the energy in the common electrode to the charge hold capacitance. Then, when the switch means turns off the switch, the first driver drives the common electrode to hold a predetermined voltage. At the same time, the second driver puts additional charges into the charge hold capacitance for the next inversion. During the next horizontal scan period, the switch means is turned on for a predetermined period to drive the common electrode with the energy held in the charge held capacitance. After the switch means turns off the switch, the first driver operates so that the common electrode holds the predetermined voltage. Same is true for the second driver.

The second aspect of the present invention operates in the same manner as the first aspect, except for that the second aspect does not have the second driver.

According to the third aspect of the present invention, when the voltage of the common electrode is changed, the switch means turns on the switch to operate the resonance circuit for a predetermined period, and moves the energy in the common electrode to the ground which is a sort of large capacitance. Then, when the switch means turns off the switch, the driver drives the common electrode to hold the predetermined voltages. During the next horizontal scan period, the switch means is turned on for a predetermined period to drive the common electrode with the energy from the ground. After the switch means turns off the switch, the driver operates to hold the predetermined voltage.
Figure 1 is a schematic diagram showing an embodiment of the present invention;
Figure 2 is waveforms at predetermined sections in the circuit shown in Figure 1;
Figure 3 is a diagram showing a second embodiment of the present invention;
Figure 4 is a diagram for illustrating a liquid crystal display panel; and
Figure 5 is a diagram for illustrating a background art.

Reference numerals and names of major components are:
- 12: Common electrode
- 14: Inductance
- 16: Analog switch
- 18: Capacitance
- 20: Second driver
- 22: First driver
- 28: Control circuit
- 30: Sense amplifier
- 100: Liquid crystal display panel
- 108: Liquid crystal
- 200: Column driver
- 300: Row driver
- 400: Driver

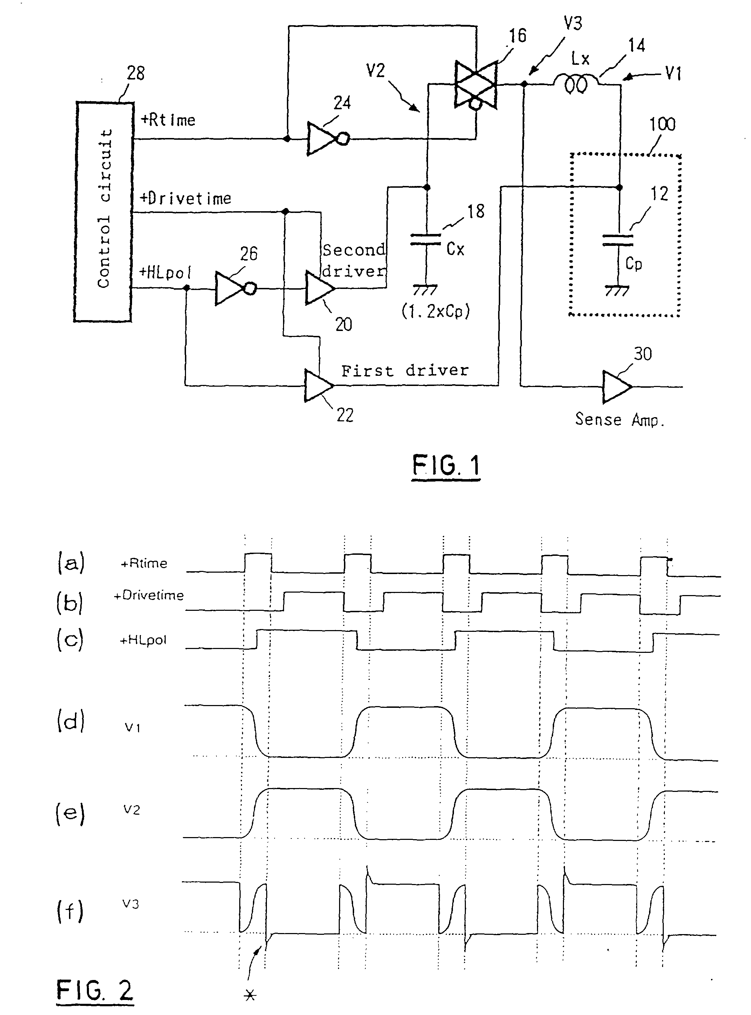

Figure 1 shows the arrangement of the present invention. Here, the LCD panel 100 is the same as that shown in Figure 4. It is assumed that the LCD panel 100 has capacity C_{P} as its capacitance as in Figure 4. A common electrode 12 is also same as that in Figure 4. The common electrode 12 is connected with an inductance 14 and a first driver 22. The inductance 14 is connected with a capacitance 18 and a second driver 20 through an analog switch 16. It is a control circuit 28 that supplies a signal (+Rtime) to operate the analog switch 16. Because it requires an inversion signal, an invertor 24 is provided. Also, a signal (+Drivetime) for operating the first and second drivers is output from the control circuit 28. The first and second drivers drive the capacitance (C_{P}) of the LCD panel 100 and the capacitance 18. Signals for driving them are also supplied from the control circuit 28. Because polarity is different between a signal driven by the first driver 20 and a signal driven by the X second driver 22, an invertor 26 is provided.

As described in the description of the background art, the voltage of the common electrode 12 must be changed every horizontal scan period depending on the capability of the first driver 22. A resonance circuit is used for the voltage change in every horizontal scan period. That is, because the common electrode 12 of the LCD panel 100 can be considered as the capacitance C_{P}, it constitutes a serial resonance circuit with the inductance 14 connected thereto. It is just sufficient to establish the size Lₓ of the inductance 14 to make the resonance frequency of the resonance circuit about 2 to 5 times the horizontal scanning frequency when taking into account the fact that the column driver 200 (Figure 4) outputs a desired voltage after the potential of the common electrode 12 is stabilized. The resonance frequency is about 100 Khz for a VGA liquid crystal display panel. In addition, the newly provided capacitance 18 is for holding the energy taken out from the capacitance Cₚ with the resonance circuit. Its capacity Cₓ is set at a value lager than the capacity C_{P} of the LCD panel 100. It is because the LCD panel 100 does not consist of only the capacitance Cₚ and the inductance 14 does not consist of only the inductance component so that some loss is caused in the circuit. If the capacity Cₓ of the capacitance 18 is equal to or less than the capacity Cₚ of the LCD panel 100, the capacitance Cₚ cannot be fully driven because of such loss. However, if there is no such loss, Cₓ = C_{P} causes no problem. Cₓ is suitably to be about 1.0 to 1.5 times Cₚ, and about 2 times even at the maximum.

Then, the operation of the circuit shown in Figure 1 is described. In common inversion, the analog switch 16 opens to start the operation of the resonance circuit. When half of the cycle of the resonance circuit passes, the analog switch 16 is closed to stop the operation of the resonance circuit. Then, the potential at C_{P} is inverted (the potential changes one of two potential which changes in the common inversion to the other). Then, the first driver 22 is activated to fix the potential of C_{P}. In this state, the capacitance 18 recovers the energy of Cₚ. However, as there is loss in the circuit as described earlier, all energy is not recovered. Thus, the second driver 20 is activated to compensate for energy loss due to the loss in the circuit and the loss caused by the circuit at the common inversion. Such supply of surplus energy enables it to quickly change Cₚ to a desired potential, and to reduce driving by the first driver 22.

Then, when the common inversion is performed again, the analog switch 16 is opened to start the operation of the resonance circuit. With the operation of the resonance circuit, the potential of Cₚ is inverted by the energy stored in the capacitance 18. As is in the above, the analog switch 16 is closed when half of the resonance cycle passes. Then, the first driver 22 is activated to fix the potential of Cₚ. The same procedure applies thereafter.

Figures 2 (a) - (c) shows waveforms of +Rtime, +Drivetime, and +HLpol signals, respectively. Half cycle of +Hlpol signal (Figure 2 (c)) is the horizontal scan period. As shown, +Rtime operates the resonance circuit, and then +Drivetime operates the first and second drivers. Such supply of signals causes V₁ and V₂ in Figure 1 to show the potential waveforms as indicated by Figures 2 (d) and (e).

Opening and closing of the analog switch 16 are controlled by the signal +Rtime, the timing of which is determined by using a following sequential circuit. It is provided after a sense amplifier 30 in Figure 1. At the moment when the analog switch 16 is turned off, counter electromotive force is generated across the coil. This voltage changes to negative when there remains current from V₃ to V₁ in Figure 1, and to positive when there remains current from V₁ to V₃. An updown counter is operated by using this voltage to constitute a synchronous circuit in start-stop type thereby finding a timing not generating such counter electromotive force (zero-cross timing). The efficiency of the circuit will be the maximum at the zero-cross timing. Figure 2 (f) shows the above. In a state where the switch 16 is at ON state (the period where +Rtime is positive), the signal V₂ is generated as is, while, when the switch 16 is turned off, there arises the effect of the counter electromotive force (* section in Figure 2 (f)).

Then, the capacity Cₓ of the capacitance 18 is so determined as to be just at the drive voltage at the zero-cross timing. If the value of Cₓ is too high, the drive waveform may cause overshoot. If it is insufficient, insufficient portion is supplied from the first drive 22. Either cases take time.

If the value Lₓ of the inductance 14 is made higher, EMI is reduced because the resonance frequency can be lowered, and it becomes easy to increase the efficiency of the circuit, but it takes much time in the common inversion. If the value Lₓ is made lower, it takes less time in the common inversion, but the loss in the circuit is increased because high current instantaneously flows, and noise tends to increase. The loss of the circuit becomes worse as the resonance frequency becomes higher. The circuit becomes inoperable at a frequency higher than the critical frequency of 2πCₚ ·Rₚ·f_{c} = 1 where the resistance of LCD panel is Rₚ, and the critical frequency is f_{c}.

Although the efficiency of the circuit is worse for higher resistance Rₚ of the liquid crystal, and the resonance condition may not be satisfied, such case is not generally caused. The reasons are as follows:

The resonance condition for the circuit shown in Figure 1 is:${\text{L}}_{\text{x}} {\text{/R}}_{\text{P}} {\text{> C}}_{\text{P}} {\text{·R}}_{\text{P}} \text{,}$ thus,${\text{R}}_{\text{p}} {\text{}}^{\text{2}} {\text{·C}}_{\text{p}} {\text{< L}}_{\text{x}}$

If the value of Rₚ exceeds the condition, no resonance occurs, and simple attenuation waveform is provided. Because the resonance completes at half cycle of the resonance circuit, and the time is required to be shorter than the horizontal scan period, the following relationship is obtained:$\text{π·} \sqrt{\text{Cp·Lx}} \text{·fs} \text{< 1}$ where fₛ is the horizontal scanning frequency. When the formula (1) is substituted for the above formula. the following has to be established:${\text{πC}}_{\text{P}} {\text{·R}}_{\text{P}} {\text{·f}}_{\text{s}} \text{< 1}$

Because the cut-off frequency determined by the time constant of the LCD panel must be higher than the horizontal scanning frequency, it is necessary that the following formula should be originally established:${\text{2πC}}_{\text{P}} {\text{·R}}_{\text{P}} {\text{·f}}_{\text{s}} \text{< 1}$

It is seen from the formula (3) that the formula (2) is always established. That is, the present invention can be applied to any panel in which the common inversion is performed. In addition, because of the difference in the constants in the formulae (2) and (3), even a frequency which cannot drive a typical panel with common inversion can drive by using a drive circuit containing the resonance circuit.

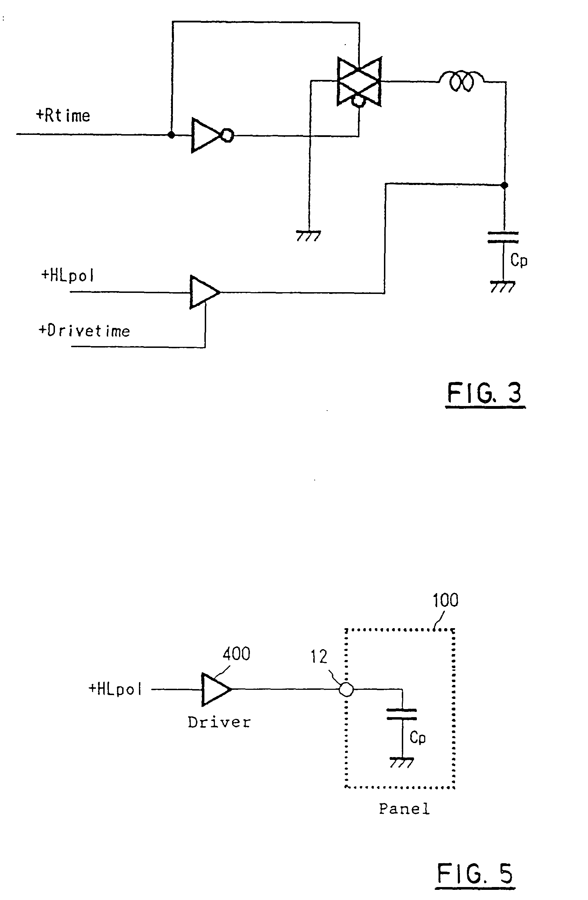

The above-mentioned embodiment of the present invention may be variously modified. For example, although the analog switch 16 is provided at the side of the capacitance 18, it may be provided at the side of the common electrode. In addition, it may be possible to eliminate the second driver, and to provide only the capacitance 18. In this case, however, because the changes driven by the first driver is increased, the speed and the power consumption are not as good as in the embodiment. Furthermore, if two potentials of the common electrode which change at the common inversion are symmetrical relative to the ground (that is, -2.5V and +2.5V), it may be possible to eliminate the capacitance 18 and the second driver, and to connect the analog switch 16 to the ground (Figure 3). In this case, because desired potential (for example, -2.5V and +2.5V) cannot be reached even if the resonance circuit is operated, the charges driven by the first driver increase. This may be further modified. If two potentials of the common electrode which change at the common inversion are +5V and OV as in the above-mentioned embodiment, a power supply for an intermediate potential +2.5V between them is connected to the analog switch 16 as in the above. If the power supply holds +2.5V potential, and has very high capacitance and high impedance, it can hold the energy as in the above, thereby being able to reduce power consumption with the resonance. While the supply voltage may be a voltage between two voltages but not at the intermediate potential, the charges driven by the first driver increase and the effect to reduce power consumption is degraded.

As described, it has been possible to provide a device which can change the voltage of the common electrode of the LCD panel to a desired voltage with less current when the voltage is changed.

It has been possible to provide a device with less power consumption by recovering and reutilizing the energy stored in the common electrode.

In addition, when an additional capacitance such as the capacitance 18 is provided, Q of the entire circuit can be increased regardless of Q of the LCD panel by selecting a capacitance with high Q so that the recovery efficiency of energy can be improved.

## Claims

1. A driver for a common electrode (12) in a liquid crystal display (100) panel comprising:
a first driver (22) for driving said common electrode in said liquid crystal display to hold a predetermined voltage every horizontal scan period;
a charge hold capacitance (18),
an inductance (14) for constructing with said charge hold capacitance and said common electrode a resonance circuit; and
switch means (16) for switching to operate said resonance circuit for a predetermined period when the voltage of said common electrode is changed.

2. The driver for a common electrode (12) in a liquid crystal display panel (100) according to claim 1, wherein said charge hold capacitance (18) has a capacity bigger than the capacity of said common electrode as a capacitance said driver further comprising a second driver (20) for putting additional charges into said charge hold capacitance to compensate for energy loss during switching.

3. The driver for a common electrode in a liquid crystal display panel according to Claim 1 or 2, wherein one end (v1) of said inductance is connected to said common electrode, and the other end (v3) is connected to said switch means.

4. The driver for a common electrode in a liquid crystal display panel according to Claim 1 or 2, wherein one end of said inductance is connected to said charge hold capacitance, and the other end is connected to said switch means.

5. The driver for a common electrode in a liquid crystal display panel according to Claim 2, wherein said second driver operates during said first driver is operating.

6. The driver for a common electrode in a liquid crystal display panel according to Claim 1 or 2, wherein the duration in which said resonance circuit operates is half of the cycle of said resonance circuit.

7. A driver for a common electrode in a liquid crystal display panel comprising:
a driver for driving said common electrode to hold two predetermined voltages symmetrical to the ground voltage every horizontal scan period;
an inductance for constructing a resonance circuit; and
switch means for switching to operate said resonance circuit for a predetermined period when the voltage of said common electrode is changed,
wherein one end of said switch means or said inductance is connected to the ground.

8. The driver for a common electrode in a liquid crystal display panel according to Claim 7, wherein
the timing to turn off said switch means is at the time when the current flowing through said inductance becomes substantially zero.

9. A liquid crystal display device comprising:
a liquid crystal display panel (100) having a common electrode (12); and
a driver for driving said common electrode as claimed in claim 1 or 2.

## Patentansprüche

1. Steuerung für eine gemeinsame Elektrode (12) in einem Bildschirm mit einer Flüssigkristallanzeige(100), die Folgendes umfasst:
eine erste Steuerung (22) zum Steuern der gemeinsamen Elektrode in der Flüssigkristallanzeige, um bei jeder waagerechten Abtastperiode eine vorgegebene Spannung einzuhalten;
eine Kapazität (18) zum Speichern der Ladung,
eine Induktivität (14), um mit der Kapazität zum Speichern der Ladung und mit der gemeinsamen Elektrode einen Schwingkreis aufzubauen; und
Schaltmittel (16) zum Schalten, um den Schwingkreis einen vorgegebenen Zeitraum lang zu betreiben, wenn sich die Spannung der gemeinsamen Elektrode ändert.

2. Steuerung für eine gemeinsame Elektrode (12) in einem Bildschirm mit einer Flüssigkristallanzeige (100) nach Anspruch 1, wobei der Wert der Kapazität zum Speichern der Ladung (18) höher ist als der Kapazitätswert der als Kapazität fungierenden gemeinsamen Elektrode, wobei die Steuerung weiterhin eine zweite Steuerung (20) umfasst, um zusätzliche Ladungen auf die Kapazität zum Speichern der Ladung aufzubringen, um den Energieverlust während des Schaltens auszugleichen.

3. Steuerung für eine gemeinsame Elektrode in einem Bildschirm mit Flüssigkristallanzeige nach Anspruch 1 oder 2, wobei ein Ende (V1) der Induktivität mit der gemeinsamen Elektrode und das andere Ende (V3) mit dem Schaltmittel verbunden ist.

4. Steuerung für eine gemeinsame Elektrode in einem Bildschirm mit einer Flüssigkristallanzeige nach Anspruch 1 oder 2, wobei ein Ende der Induktivität mit der die Ladung speichernden Kapazität verbunden ist und das andere Ende mit dem Schaltmittel verbunden ist.

5. Steuerung für eine gemeinsame Elektrode in einem Bildschirm mit Flüssigkristallanzeige nach Anspruch 2, wobei die zweite Steuerung dann arbeitet, wenn auch die erste Steuerung arbeitet.

6. Steuerung für eine gemeinsame Elektrode in einem Bildschirm mit Flüssigkristallanzeige nach Anspruch 1 oder 2, wobei die Dauer, in welcher der Schwingkreis arbeitet, dem halben Zyklus des Schwingkreises entspricht.

7. Steuerung für eine gemeinsame Elektrode in einem Bildschirm mit Flüssigkristallanzeige, die Folgendes umfasst:
eine Steuerung zum Steuern der gemeinsamen Elektrode, um bei jeder waagerechten Abtastperiode zwei vorgegebene Spannungen symmetrisch zur Erdungsspannung zu halten;
eine Induktivität zum Aufbau eines Schwingkreises; und
Schaltmittel zum Schalten, damit der Schwingkreis während eines vorgegebenen Zeitraumes betrieben wird, in dem sich die Spannung der gemeinsamen Elektrode verändert,
wobei ein Ende des Schaltmittels oder die Induktivität mit dem Erdpotential verbunden ist.

8. Steuerung für eine gemeinsame Elektrode in einem Bildschirm mit Flüssigkristallanzeige nach Anspruch 7, wobei
der Zeitpunkt zum Abschalten des Schaltmittels zu dem Zeitpunkt eintritt, wenn der tatsächliche Durchfluss durch die Induktivität im Wesentlichen gegen null geht.

9. Flüssigkristall-Anzeigebauelement, das Folgendes umfasst:
einen Bildschirm mit einer Flüssigkristallanzeige (100), die eine gemeinsame Elektrode (12) hat; und
eine Steuerung zum Steuern der gemeinsamen Elektrode, so wie es nach Anspruch 1 oder 2 beansprucht wird.

## Revendications

1. Dispositif de commande d'une électrode commune (12) dans un panneau d'affichage à cristaux liquides (100) comprenant :
un premier élément de commande (22) pour commander à ladite électrode commune dudit écran à cristaux liquide de maintenir une tension prédéterminée pendant la durée de chaque balayage horizontal ;
une capacitance de maintien de charge (18) ;
une inductance (14) pour construire, avec ladite capacitance de maintien de charge et ladite électrode commune, un circuit de résonance; et
un dispositif de commutation (14) qui bascule pour faire fonctionner ledit circuit de résonance pendant une durée prédéterminée quand la tension de ladite électrode commune est modifiée.

2. Dispositif de commande pour une électrode commune (12) dans un panneau d'affichage à cristaux liquides (100) selon la revendication 1, où ladite capacitance de maintien de charge (18) a une capacité supérieure à la capacité de ladite électrode commune employée comme capacitance, ledit dispositif de commande comprenant en outre un deuxième élément de commande (20) pour ajouter à ladite capacitance de maintien de charge des charges supplémentaires pour compenser les pertes d'énergie qui se produisent au cours de la commutation.

3. Dispositif de commande pour une électrode commune dans un panneau d'affichage à cristaux liquides selon la revendication 1 ou 2, où une extrémité (V1) de ladite inductance est reliée à ladite électrode commune et, l'autre extrémité (V3) est connectée au dit commutateur.

4. Dispositif de commande pour une électrode commune dans un panneau d'affichage à cristaux liquides selon la revendication 1 ou 2, où une extrémité de ladite inductance est connectée à ladite capacitance de maintien de charge et, l'autre extrémité est reliée au dit commutateur.

5. Dispositif de commande pour une électrode commune dans un panneau d'affichage à cristaux liquides selon la revendication 2, où ledit deuxième élément de commande fonctionne pendant que ledit premier élément de commande fonctionne.

6. Dispositif de commande pour une électrode commune dans un panneau d'affichage à cristaux liquides selon la revendication 1 ou 2, où la durée du fonctionnement dudit circuit de résonance correspond à la moitié du cycle dudit circuit de résonance.

7. Dispositif de commande pour une électrode commune dans un panneau d'affichage à cristaux liquides comprenant :
un élément de commande pour commander à ladite électrode commune de maintenir deux tensions prédéterminées symétriques à la tension de terre pendant la durée de chaque balayage horizontal ;
une inductance pour construire un circuit de résonance; et
un moyen de commutation qui bascule pour faire fonctionner ledit circuit de résonance pendant une durée prédéterminée quand la tension de ladite électrode commune est modifiée,
où une extrémité dudit commutateur ou de ladite inductance est reliée à la terre.

8. Dispositif de commande pour une électrode commune dans un panneau d'affichage à cristaux liquides selon la revendication 7, où
le minutage pour couper ledit commutateur est le moment où le courant traversant ladite inductance devient sensiblement nul.

9. Dispositif d'affichage à cristaux liquides comprenant :
un panneau d'affichage à cristaux liquides (100) comprenant une électrode commune(12); et
un dispositif de commande pour commander ladite électrode commune tel que revendiqué dans les revendications 1 ou 2.
